# EUROPEAN PATENT APPLICATION

(11) **EP 3 764 141 A1**
(43) Date of publication of application: **13.01.2021**
(21) Application number: 19764979.1
(22) Date of filing: 05.03.2019
(51) Int. Cl.: G02B 6/44

(54) **OPTICAL FIBER RIBBON, OPTICAL UNIT, AND OPTICAL FIBER CABLE**

(30) Priority: 05.03.2018 JP 2018038695
(71) Applicant: SUMITOMO ELECTRIC INDUSTRIES, LTD., Osaka-shi, Osaka 541-0041 (JP)
(72) Inventor: SHIMODA, Yuuki, Osaka-shi, Osaka 541-0041 (JP); NAGAO, Yoshiaki, Osaka-shi, Osaka 541-0041 (JP); SATO, Fumiaki, Osaka-shi, Osaka 541-0041 (JP)
(74) Representative: Hoffmann Eitle
(86) International application number: PCT/JP2019/008500
(87) International publication number: WO 2019/172214

(57) **Abstract**

Provided is an optical fiber ribbon in which four or more optical fibers including a colored layer are arranged in parallel. A color of the colored layer includes: a first color for coloring the colored layer of the optical fiber arranged on one end side in an arrangement direction; and a second color which is a color different from the first color and which colors the colored layer of other optical fibers not colored with the first color. The number of optical fibers colored with the first color is different from the number of optical fibers colored with the second color.

## Description

### TECHNICAL FIELD

The present disclosure relates to an optical fiber ribbon, an optical unit, and an optical fiber cable.

This application is based upon and claims the benefit of priority from Japanese Patent Application No. 2018-038695, filed on March 5, 2018, and incorporates all the contents described in the Japanese Patent application.

### BACKGROUND ART

Patent Literature 1 discloses a method of changing a color of a collective coating in order to identify an optical fiber ribbon (also referred to as a ribbon) in which optical fibers are arranged in parallel and collectively coated. Patent Literature 2 discloses a method for showing a ribbon number on the collective coating.

### CITATION LIST

### PATENT LITERATURE

Patent Literature 1: JP-A-2003-255203
Patent Literature 2: JP-A-H08-220397

### SUMMARY OF INVENTION

An optical fiber ribbon according to the present disclosure is an optical fiber ribbon in which four or more optical fibers including a colored layer are arranged in parallel, in which a color of the colored layer includes a first color for coloring the colored layer of the optical fiber arranged on one end side in an arrangement direction; and a second color which is a color different from the first color and which colors the colored layer of other optical fibers not colored with the first color, and the number of optical fibers colored with the first color is different from the number of optical fibers colored with the second color.

### BRIEF DESCRIPTION OF DRAWINGS

Fig. 1 is a diagram illustrating an example of an optical fiber cable according to an embodiment of the present disclosure.
Fig. 2A is a diagram illustrating an example of a structure of an intermittent ribbon.
Fig. 2B is a cross-sectional view taken along line B-B of Fig. 2A.
Fig. 3 is a diagram illustrating an optical fiber ribbon according to a first embodiment.
Fig. 4A is a diagram illustrating an optical fiber ribbon according to a second embodiment.
Fig. 4B is a diagram illustrating an optical fiber ribbon to which a ribbon marking different from that of Fig. 4A is added.
Fig. 5A is a diagram illustrating an optical fiber ribbon according to a third embodiment.
Fig. 5B is a diagram illustrating an optical fiber ribbon colored with a color different from that of Fig. 5A.
Fig. 6A is a diagram illustrating an optical fiber ribbon according to a fourth embodiment.
Fig. 6B is a diagram illustrating an optical fiber ribbon to which a ribbon marking different from that of Fig. 6A is added.

### DESCRIPTION OF EMBODIMENTS

### [Technical problem]

An optical fiber generally includes two coating layers provided on the outside of a glass fiber which forms an optical wave circuit and a colored layer further provided on the outside thereof. The optical fiber including the glass fiber and the two coating layers is also referred to as a coated optical fiber. The one in which the colored layer is further provided on the outside of the coated optical fiber is also referred to as an optical fiber.

The optical fiber in an optical fiber cable is identified by applying colors (twelve colors: blue, orange, green, brown, gray, white, red, black, yellow, purple, pink, and light blue) defined by an international standard specified by the International Electro technical Commission (IEC).

However, as the optical fiber cable becomes, for example, multi-core, it becomes necessary to identify the optical fiber by a method other than color coding of the optical fibers.

For example, in order to identify an optical fiber ribbon (also referred to as a ribbon) in which the optical fibers are arranged in parallel and collectively coated, known is a method in which a marking (also referred to as a ribbon marking) is applied to a collective coating, a method in which a color of the collective coating is changed as described in Patent Literature 1, and a method in which a ribbon number is shown on the collective coating as described in Patent Literature 2.

However, since the ribbon marking and the ribbon number described in Patent Literature 2 that are applied on the collective coating are buried in the color of the colored layer as they are, there is a problem that it is difficult to see the ribbon marking and the ribbon number and to distinguish the ribbon marking and ribbon number at a glance. Further, since the color of the collective coating as described in Patent Literature 1 can be changed only in twelve types, it is difficult to cope with, for example, the multi-core of the optical fiber cable.

The present disclosure has been made in consideration of the above-described actual circumstances, and an object thereof is to provide an optical fiber ribbon, an optical unit, and an optical fiber cable in which identification can be easily performed with a simple method.

### [Advantageous effects of the present disclosure]

According to the present disclosure, an optical fiber ribbon can be easily identified with a simple method. An arrangement direction of the optical fiber can be also quickly specified.

### [Description of embodiments of the present disclosure]

First, contents of the embodiments of the present disclosure will be listed and described.
(1) An optical fiber ribbon according to one aspect of the present disclosure is an optical fiber ribbon in which four or more optical fibers including a colored layer are arranged in parallel, in which a color of the colored layer includes a first color for coloring the colored layer of the optical fiber arranged on one end side in an arrangement direction; and a second color which is a color different from the first color and which colors the colored layer of other optical fibers not colored with the first color, and the number of optical fibers colored with the first color is different from the number of optical fibers colored with the second color. Since the optical fiber can be easily identified with a simple method by using a combination of the first color and the second color, and the colors viewed in the arrangement direction of the optical fiber are asymmetrical, the arrangement direction of the optical fiber can also be quickly specified.
(2) In one aspect of the optical fiber ribbon according to the present disclosure, a ribbon marking is applied to the optical fiber ribbon. The number of identifiable optical fiber ribbons can be increased by applying the ribbon marking.
(3) In one aspect of the optical fiber ribbon according to the present disclosure, the color of the colored layer of at least one of the optical fibers colored with the second color is a white color or a black color. When a part of the optical fiber colored with the second color is colored with white or black, it is possible to increase the number of identifiable optical fiber ribbons.
(4) In one aspect of the optical fiber ribbon according to the present disclosure, the second color is a transparent color, and a ribbon marking is applied to the optical fiber ribbon. When the second color is the transparent color and the ribbon marking is applied to the optical fiber ribbon, the number of identifiable optical fiber ribbons can be increased by applying the ribbon marking thereto, and the ribbon marking can be easily recognized even when the optical fiber ribbons are viewed from the back side.
(5) An optical unit according to one aspect of the present disclosure is an optical unit in which the optical fiber ribbons described above are collected. It is possible to provide the optical unit in which the optical fiber ribbon can be easily identified.
(6) An optical fiber cable according to one aspect of the present disclosure is an optical fiber cable that accommodates the optical fiber ribbon described above. It is possible to provide the optical fiber cable in which the optical fiber ribbon can be easily identified.

### [Details of embodiments of the present disclosure]

Hereinafter, preferred embodiments of an optical fiber ribbon, an optical unit, and an optical fiber cable according to the present disclosure will be described with reference to the accompanying drawings.

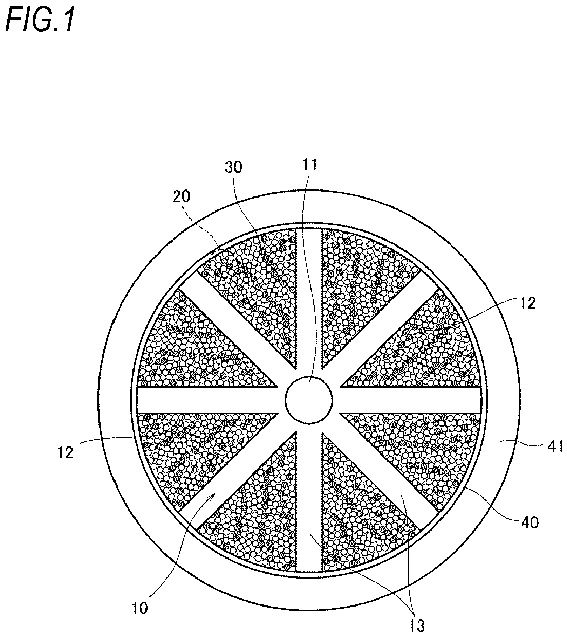

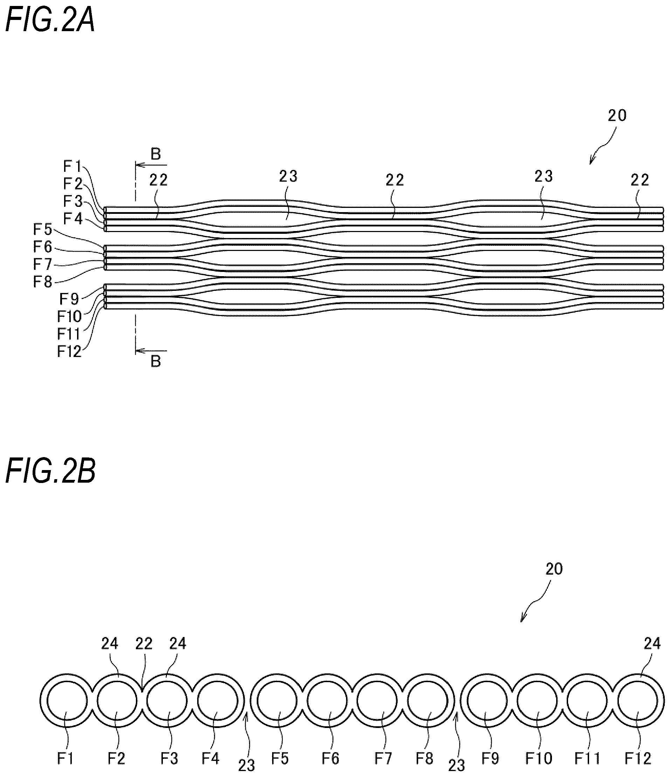

Fig. 1 is a diagram illustrating an example of an optical fiber cable according to an embodiment of the present disclosure, and Fig. 2A is a diagram illustrating an example of a structure of an intermittent ribbon.

An optical fiber cable 1 illustrated in Fig. 1 includes, for example, a slot rod 10, an optical unit 30, a wrapping tape 40 which is longitudinally wrapped or spirally wrapped around a periphery of the slot rod 10, and a cable sheath 41 provided around a periphery of the wrapping tape 40.

A tension member 11 is embedded in a center portion of the slot rod 10. As the tension member 11, a wire material having resistance to tension and compression such as, for example, a steel wire and a fiber reinforced plastic (FRP) is used.

A plurality of (for example, eight) spiral or SZ-shaped slot grooves 12 are formed on an outer peripheral surface of the slot rod 10 along a cable longitudinal direction.

Specifically, the slot rod 10 includes, for example, eight slot ribs 13 radially extending from a periphery of the tension member 11, and the slot rib 13 forms the slot groove 12 and divides it from other slot grooves 12. A tracer mark for identifying a location of the slot groove 12 can be provided on an outer peripheral surface of the slot rib 13.

An intermittent ribbon 20 is, for example, accommodated in each slot groove 12. The intermittent ribbon 20 corresponds to the optical fiber ribbon of the present disclosure.

The intermittent ribbon is formed by arranging a plurality of optical fibers in a parallel line, and intermittently connecting the optical fibers adjacent to each other by a connecting portion and a non-connecting portion. Fig. 2A illustrates a state in which the intermittent ribbon is opened in an arrangement direction, Fig. 2B illustrates a cross-sectional view taken along the line B-B of Fig. 2A, and the intermittent ribbon 20 in the drawing is an example of a configuration in which twelve optical fibers F1 to F12 are arranged in parallel and are intermittently connected to each other every two optical fibers.

As illustrated in Fig. 2B, a ribbon coating 24 made of an ultraviolet curable resin, etc., is provided around a periphery of each of the optical fibers F1 to F12. For example, optical fibers formed by integrating two optical fibers are intermittently connected to each other by a connecting portion 22 and a non-connecting portion 23. The ribbon coatings 24 are connected to each other at the connecting portion 22, and the adjacent ribbon coatings 24 are separated from each other without being connected to each other at the non-connecting portion 23. The intermittent ribbon does not necessarily need to be provided with the connecting portion and the non-connecting portion for every two optical fibers, and for example, may be intermittently connected at the connecting portion and the non-connecting portion for each one optical fiber.

Each of the optical fibers F1 to F12 accommodated in the intermittent ribbon is formed by, for example, further applying a colored layer to the outside of what is referred to as a coated optical fiber in which a glass fiber having a standard outside diameter of 125 µm is coated with a coating having an outside diameter of approximately 250 µm, but is not limited thereto, and may be a small diameter fiber having a coating outer diameter in the range of 135 µm to 220 µm, for example, approximately 165 µm and 200 µm. High-density mounting is further easily performed by using the small diameter fiber.

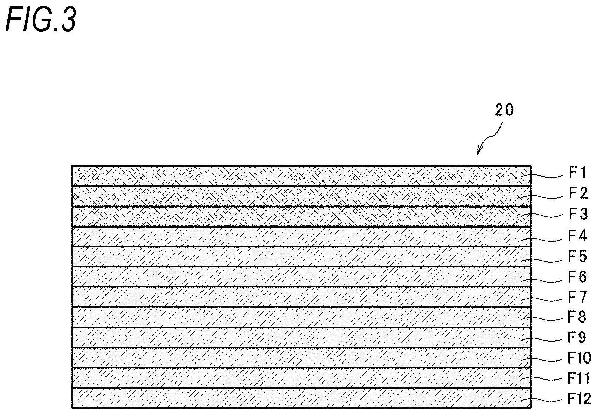

In order to easily identify the number of the intermittent ribbon 20 (hereinafter, referred to as a ribbon number), the colored layer of each of the optical fibers F1 to F12 is colored with a predetermined color. This point will be described later in detail in Fig. 3 and after.

The optical unit 30 illustrated in Fig. 1 is formed by, for example, collecting a plurality of (for example, 36) the intermittent ribbons 20 including twelve optical fibers and stranding the collected plurality of the intermittent ribbons 20 in a spiral shape, and is accommodated in each slot groove 12. The stranding of the intermittent ribbon 20 may be an SZ shape that is periodically inverted in addition to a spiral shape in one direction. The intermittent ribbon 20 has flexibility as compared with a general ribbon, and when the optical unit 30 is formed with the intermittent ribbon, it is possible to improve an occupation rate of the optical fiber 21 in the slot groove 12. Such an intermittent ribbon does not necessarily need to be used as the ribbon forming the optical unit 30, and a connecting-type ribbon may be used.

The slot rod 10 is wrapped by the wrapping tape 40 so that the optical unit 30 does not pop out, and an outermost peripheral shape thereof is in a circular shape.

As the wrapping tape 40, for example, a non-woven fabric formed into a tape shape and a material obtained by causing a base material such as polyethylene terephthalate (PET) and the non-woven fabric to adhere to each other are used. A water absorbing agent (for example, water absorbing powder) may be applied to the wrapping tape. When the wrapping tape is caused to function as a water absorbing layer, it is possible to prevent water from flowing to the intermittent ribbon.

The cable sheath 41 formed by extruding a resin such as, for example, polyethylene (PE) and polyvinyl chloride (PVC) is provided on the outside of the wrapping tape 40.

### (First embodiment)

Fig. 3 is a diagram illustrating an optical fiber ribbon of a first embodiment.

In the same manner as that of the intermittent ribbon 20 illustrated in Fig. 2A, in the intermittent ribbon 20 illustrated in Fig. 3, the optical fibers F1 to F12 are arranged in order from one end of the intermittent ribbon 20 (upper side of Fig. 3), and for example, a total of three colored layers of the optical fibers F1 to F3 are colored with a first color, and a total of nine colored layers of the optical fibers F4 to F12 are colored with a second color.

The first color applied to the colored layer is a color defined by IEC with respect to the optical fiber, and is selected from, for example, six colors of blue, orange, green, brown, gray, and white. On the other hand, in the first embodiment, the second color is also a color defined by IEC, but is selected from a color different from the first color, for example, six colors of red, black, yellow, purple, pink, and light blue.

As illustrated in Fig. 3, the colored layers of the three optical fibers F1 to F3 adjacent to each other from one end of the intermittent ribbon 20 are set to the first color (for example, blue), the colored layers of the remaining nine optical fibers F4 to F12 are set to the second color (for example, red), and the number of coloring in blue is different from the number of coloring in red. A combination of the blue color and the red color is set to a ribbon number 1, and a combination of other colors is set to a different ribbon number, thereby making it possible to easily identify the intermittent ribbon 20 of the ribbon number 1. When an arrangement of blue is set to start from the optical fiber F1 (optical fiber number 1), an arrangement direction of the optical fibers F1 to F12 can also be specified.

Next, the colored layers of the optical fibers F1 to F3 are set to the first color (for example, orange), the colored layers of the optical fibers F4 to F12 are set to the second color (for example, red), and a combination of the orange color and the red color is set to a ribbon number 2. Further, the colored layers of the optical fibers F1 to F3 are set to the first color (for example, green), the colored layers of the optical fibers F4 to F12 are set to the second color (for example, red), and a combination of the green color and the red color is set to a ribbon number 3. That is, the color of the second color is fixed, and the first color is set to any one color of blue, orange, green, brown, gray, and white.

Hereinafter, when a combination of the first color (for example, brown) and the second color (for example, red) is set to a ribbon number 4, a combination of the first color (for example, gray) and the second color (for example, red) is set to a ribbon number 5, and a combination of the first color (for example, white) and the second color (for example, red) is set to a ribbon number 6, it is possible to identify six types of optical fiber ribbons by a combination in which the first color is any one color of blue, orange, green, brown, gray, and white, and the second color is red.

Next, when the second color is, for example, black, six types of identifications (ribbon numbers 7 to 12) can be further performed by a combination in which the first color is any one color of blue, orange, green, brown, gray, and white, and the second color is black. When the second color is, for example, yellow, six types of identifications (ribbon numbers 13 to 18) can be further performed by a combination in which the first color is any one color of blue, orange, green, brown, gray, and white, and the second color is yellow. In the same manner, when the second color is changed, for example, in the order of purple, pink, and light blue, six types of identifications (ribbon numbers 19 to 24, ribbon numbers 25 to 30, ribbon numbers 31 to 36) can be respectively performed.

Here, in order to easily find the desired intermittent ribbon 20 from the optical unit 30, for example, it is desirable that six intermittent ribbons 20 having the same second color (for example, red) are gathered and accommodated in the slot groove 12.

Specifically, for example, a case of selecting the intermittent ribbon 20 of the ribbon number 1 is assumed. As described above, the ribbon number 1 is the combination in which the first color is blue and the second color is red. Therefore, a bundle of the intermittent ribbons 20 gathered in red is first extracted from the slot groove 12. Next, by searching the intermittent ribbon 20 including a colored optical fiber in blue among the extracted intermittent ribbons 20, the intermittent ribbon 20 of the ribbon number 1 can be selected. One end of the colored optical fiber in blue is specified as the optical fiber of the optical fiber number 1, and splicing work is performed.

Here, for example, when the intermittent ribbon 20 of the ribbon number 2 is selected, the intermittent ribbon 20 including a colored optical fiber in orange may be searched among the intermittent ribbons 20 gathered in red. Further, for example, when the intermittent ribbon 20 of the ribbon number 7 is selected, the intermittent ribbon 20 gathered in black may be searched, and the intermittent ribbon 20 including a colored optical fiber in blue may be searched thereamong. In the same manner, for example, when the intermittent ribbon 20 of the ribbon number 13 is selected, the intermittent ribbon 20 gathered in yellow may be searched, and the intermittent ribbon 20 including the colored optical fiber in blue may be searched thereamong.

As described above, a total of thirty-six types of the intermittent ribbons 20 can be easily identified from the combination of the first color and the second color. Since the colors viewed in the arrangement direction of the optical fibers F1 to F12 (ribbon width direction) are asymmetrical between the left side and the right side, and the number of optical fibers F1 to F3 colored with the first color is not the same as the number of optical fibers F4 to F12 colored with the second color, the arrangement direction of the optical fibers F1 to F12 can also be quickly specified.

When the first and second colors are set to colors specified by IEC, coloring can be performed by using a related-art device.

In the first embodiment, the example in which the number of coloring of the first color is three and the number of coloring of the second color is nine is described. However, the present disclosure is not limited to this example as far as the number of coloring of the first color and the number of coloring of the second color are different from each other. That is, for example, the number of coloring of the first color may be five and the number of coloring of the second color may be seven, or the number of coloring of the first color may be seven and the number of coloring of the second color may be five. However, when the number of coloring with the first color (or the second color) is only one, it is difficult to recognize the color of the first color, and when the number of coloring with the first color and the number of coloring with the second color are the same, it becomes difficult to specify the arrangement direction. Therefore, it is desirable that the number of coloring with the first color (or the second color) is set to approximately three in the case of the optical fiber ribbon including twelve optical fibers.

Further, although the first embodiment describes the example of the intermittent ribbon 20 including twelve optical fibers, the present disclosure is not limited to this example. For example, the present disclosure can be applied to an intermittent ribbon including four to thirty-six optical fibers. As an example, in the case of an intermittent ribbon including four optical fibers which are the optical fibers F1 to F4, for example, the one in which the optical fiber F1 is colored with blue, and the optical fibers F2 to F4 are colored with red is set to a ribbon number 1, and a total of thirty-six types of the intermittent ribbons including four optical fibers can be easily identified by using the same color combination.

### (Second embodiment)

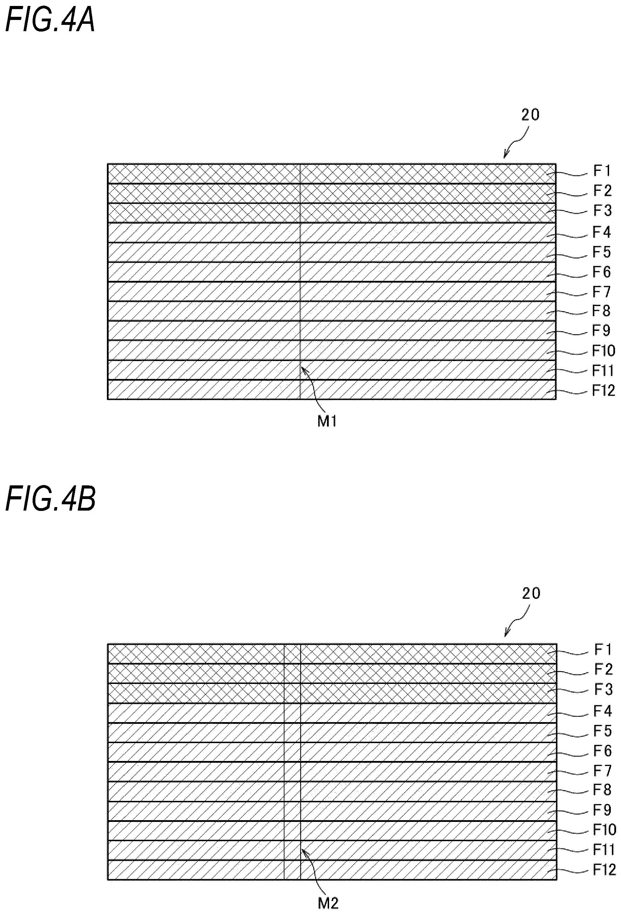

Figs. 4A and 4B are diagrams illustrating an optical fiber ribbon of a second embodiment.

In the first embodiment, a total of thirty-six types of identifications can be performed. However, when the number of identifications is desired to be further increased, a marking may be further applied.

Specifically, as illustrated in Fig. 4A, while the colored layers of the optical fibers F1 to F3 are colored with the first color (any one color of blue, orange, green, brown, gray, and white) in the same manner as that of the first embodiment, and the colored layers of the remaining eight optical fibers F4 to F12 are colored with the second color (any one color of red, black, yellow, purple, pink, and light blue), in addition, a ribbon marking M1 (one thin bar) is added to the ribbon coating 24 described in Fig. 2B.

As illustrated in Fig. 4A, the colored layers of the three optical fibers F1 to F3 adjacent to each other from one end of the intermittent ribbon 20 are set to the first color (for example, blue), the colored layers of the remaining nine optical fibers F4 to F12 are set to the second color (for example, red), and a combination of the blue color, the red color, and the ribbon marking M1 is set to a ribbon number 1.

In the same manner, when the ribbon marking M1 is combined with the color combination of the first embodiment, thirty-six types of identifications can be further performed.

As illustrated in Fig. 4B, when a ribbon marking M2 (two thin bars) is added to the ribbon coating 24 described in Fig. 2B, thirty-six types of identifications can be further performed.

Although illustration is omitted, when a ribbon marking M3 (three thin bars) is added thereto, thirty-six types of identifications can be further performed. In the same manner, when a ribbon marking M4 (four thin bars), a ribbon marking M5 (one thick bar), a ribbon marking M6 (one thick bar and one thin bar) are added thereto in this order, the number of identifications can be further increased by thirty-six types each time.

As described above, by the combination with the ribbon markings M1 to M6, a total of 252 types of the intermittent ribbons 20 can be easily identified together with the case in which the ribbon marking is not included.

In the same manner as that of the first embodiment, since the arrangement directions of the optical fibers F1 to F12 are asymmetrical therebetween, the arrangement directions of the optical fibers F1 to F12 can also be quickly specified. Further, since there are only two colors, when the types of ribbon markings are approximately six types, the ribbon marking can be easily identified.

### (Third embodiment)

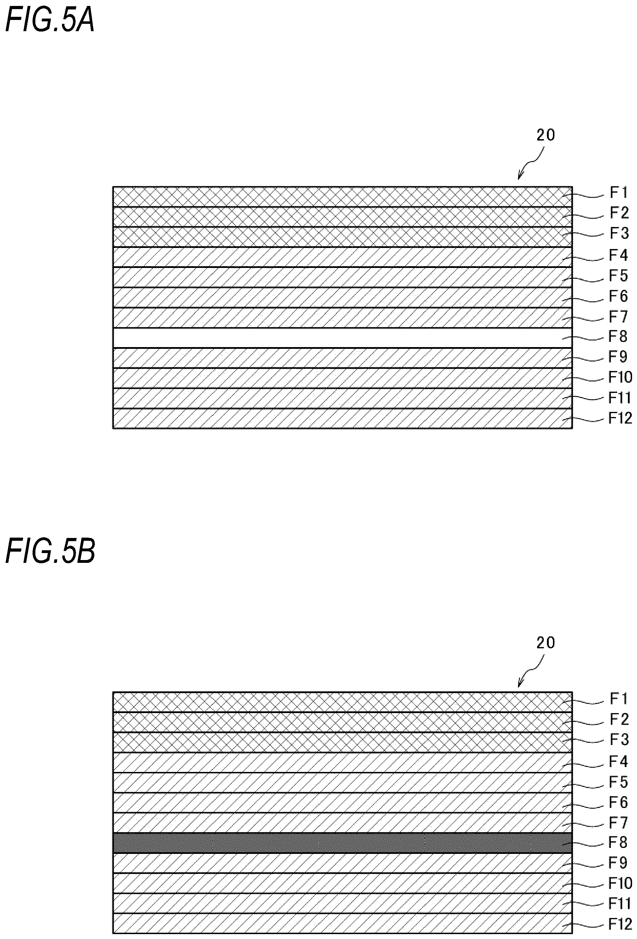

Figs. 5A and 5B are diagrams illustrating an optical fiber ribbon according to a third embodiment.

In the first embodiment, a total of thirty-six types of identifications can be performed. However, when the number of identifications is desired to be further increased, the colored layer of at least one of the colored optical fibers colored with the second color may be colored with white or black.

Specifically, as illustrated in Fig. 5A, while the colored layers of the optical fibers F1 to F3 are colored with the first color (any one color of blue, orange, green, brown, gray, and white) in the same manner as that of the first embodiment, and the colored layers of the remaining eight optical fibers F4 to F12 are mainly colored with the second color (any one color of red, black, yellow, purple, pink, and light blue), in the present embodiment, the colored layer of the optical fiber F8 (optical fiber number 8), which is the center of the optical fibers colored with the second color, is colored with white. In this case, the optical fiber F8 has a color different from those of the optical fibers F4 to F7 and F9 to F12 of the second color (for example, red), and a combination of blue, red, and white is set to a ribbon number 37.

When a combination of the first color (for example, orange), the second color (for example, red), and the optical fiber number 8 colored with white is set to a ribbon number 38, a combination of the first color (for example, green), the second color (for example, red), and the optical fiber number 8 colored with white is set to a ribbon number 39, a combination of the first color (for example, brown), the second color (for example, red), and the optical fiber number 8 colored with white is set to a ribbon number 40, a combination of the first color (for example, gray), the second color (for example, red), and the optical fiber number 8 colored with white is set to a ribbon number 41, and a combination of the first color (for example, white), the second color (for example, red), and the optical fiber number 8 colored with white is set to a ribbon number 42, six types of identifications can be further performed by a combination in which the first color is any one color of blue, orange, green, brown, gray, and white, the second color is red, and the optical fiber number 8 is white.

Next, when the second color is, for example, black, six types of identifications (ribbon numbers 43 to 48) can be further performed by a combination in which the first color is any one color of blue, orange, green, brown, gray, and white, the second color is black, and the optical fiber number 8 is white. When the second color is, for example, yellow, six types of identifications (ribbon numbers 49 to 54) can be further performed by a combination in which the first color is any one color of blue, orange, green, brown, gray, and white, the second color is yellow, and the optical fiber number 8 is white. In the same manner, when the second color is changed, for example, in the order of purple, pink, and light blue, six types of identifications (ribbon numbers 54 to 60, ribbon numbers 61 to 66, and ribbon numbers 67 to 72) can be respectively performed.

As described above, in addition to the combination of colors in the first embodiment, since the combination with the white color in the optical fibers colored with the second color enables thirty-six more types of identifications than the first embodiment, a total of seventy-two types of intermittent ribbons 20 can be easily identified.

As illustrated in Fig. 5B, for example, the optical fiber F8 (optical fiber number 8) may be colored with black. In this case, in the same manner as that of Fig. 5A, a total of seventy-two types of intermittent ribbons 20 can be easily identified by a combination in which the first color is any one color of blue, orange, green, brown, gray, and black, the second color is any one color of red, white, yellow, purple, pink, and light blue, and the optical fiber number 8 is black.

In the third embodiment, while the example in which only one optical fiber number 8 is white or black is described, for example, two optical fiber numbers 7 and 8 or three optical fiber numbers 7 to 9 may be colored with white or black.

### (Fourth embodiment)

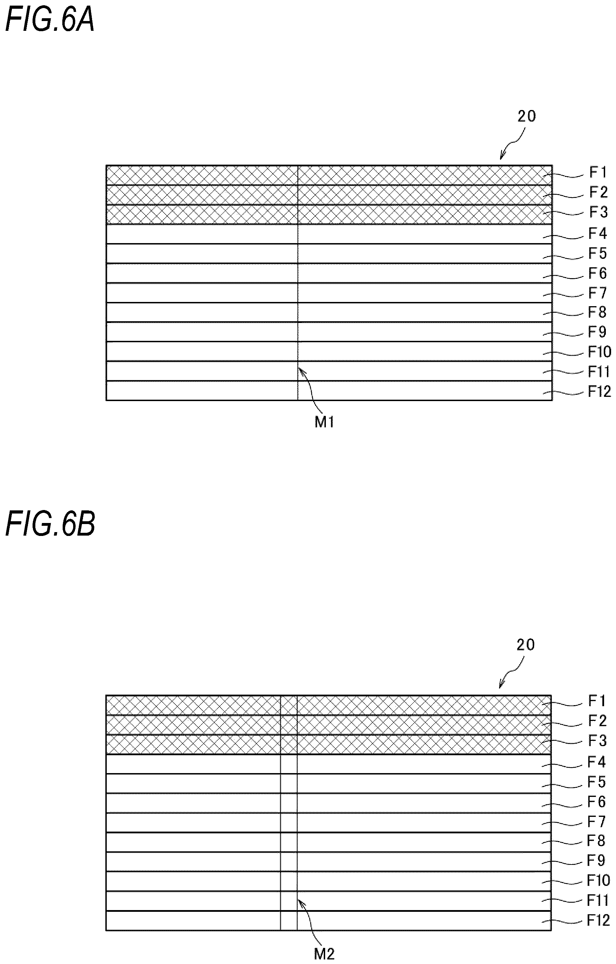

Figs. 6A and 6B are diagrams illustrating an optical fiber ribbon according to a fourth embodiment.

In the first embodiment, a total of thirty-six types of identifications can be performed, and when the number of identifications is desired to be further increased, the increase thereof can be realized by further performing marking to the combination of colors in the first embodiment as shown in the second embodiment.

The fourth embodiment is an example in which the number of identifications is increased by performing marking, and also, the visibility of the marking is improved.

Specifically, as illustrated in Fig. 6A, the colored layers of the optical fibers F1 to F3 are colored with the first color (any one color of blue, orange, green, brown, gray, white, red, black, yellow, purple, pink, and light blue), the colored layers of the remaining eight optical fibers F4 to F12 are colored with the second color (transparent color), and the ribbon marking M1 (one thin bar) is added to the ribbon coating 24 described in Fig. 2B. A combination of the blue color, the transparent color, and the ribbon marking M1 is set to a ribbon number 1.

Next, a combination in which the colored layers of the optical fibers F1 to F3 are colored with the first color (for example, orange), the colored layers of the optical fibers F4 to F12 are colored with the transparent color, and the ribbon marking M1 is added is set to a ribbon number 2. A combination in which the colored layers of the optical fibers F1 to F3 are colored with the first color (for example, green), the colored layers of the optical fibers F4 to F12 are colored with the transparent color, and the ribbon marking M1 is added is set to a ribbon number 3.

Hereinafter, when a combination of the first color (for example, brown), the transparent color, and the ribbon marking M1 is set to a ribbon number 4, a combination of the first color (for example, gray), the transparent color, and the ribbon marking M1 is set to a ribbon number 5, a combination of the first color (for example, white), the transparent color, and the ribbon marking M1 is set to a ribbon number 6, a combination of the first color (for example, red), the transparent color, and the ribbon marking M1 is set to a ribbon number 7, a combination of the first color (for example, black), the transparent color, and the ribbon marking M1 is set to a ribbon number 8, a combination of the first color (for example, yellow), the transparent color, and the ribbon marking M1 is set to a ribbon number 9, a combination of the first color (for example, purple), the transparent color, and the ribbon marking M1 is set to a ribbon number 10, a combination of the first color (for example, pink), the transparent color, and the ribbon marking M1 is set to a ribbon number 11, and a combination of the first color (for example, light blue), the transparent color, and the ribbon marking M1 is set to a ribbon number 12, twelve types of identifications can be performed by a combination of any one color of blue, orange, green, brown, gray, white, red, black, yellow, purple, pink, and light blue, the transparent color, and the ribbon marking M1.

Next, as illustrated in Fig. 6B, when the ribbon marking M2 (two thin bars) is added to the ribbon coating 24 described in Fig. 2B, twelve types of identifications can be further performed by a combination of any one color of blue, orange, green, brown, gray, white, red, black, yellow, purple, pink, and light blue with the transparent color.

Further, although not illustrated, when the ribbon marking M3 (three thin bars) is added thereto, twelve types of identifications can be further performed by a combination of any one color of blue, orange, green, brown, gray, white, red, black, yellow, purple, pink, and light blue with the transparent color. In the same manner, when the ribbon marking M4 (four thin bars), the ribbon marking M5 (one thick bar), the ribbon marking M6 (one thick bar and one thin bar) are added thereto in this order, the number of identifications can be further increased by twelve types each time.

In this manner, by the combination with the ribbon markings M1 to M6, together with the case in which the ribbon marking is not included, a total of eighty-four types of intermittent ribbons 20 can be easily identified. When the second color is colored, the ribbon markings M1 to M6 may be difficult to be identified, but in the fourth embodiment, since the second color is transparent, when the ribbon markings M1 to M6 are added, the ribbon markings M1 to M6 can be easily recognized even when the intermittent ribbon 20 is viewed from the back side. Further, when the types of ribbon markings are approximately six types, the ribbon markings can be easily identified.

It is intended that the embodiments disclosed this time are to be considered as illustrative in all points rather than restrictive. The scope of the present disclosure is indicated by the scope of the claims rather than by the above-described meanings, and is intended to include all modifications within meanings equivalent to the scope of the claims and within the scope thereof.

### REFERENCE SIGNS LIST

1: optical fiber cable
10: slot rod
11: tension member
12: slot groove
13: slot rib
20: intermittent ribbon
22: connecting portion
23: non-connecting portion
24: ribbon coating
30: optical unit
40: wrapping tape
41: cable sheath
F1 to F12: optical fiber
M1, M2: ribbon marking

## Claims

1. An optical fiber ribbon in which four or more optical fibers including a colored layer are arranged in parallel,
wherein a color of the colored layer includes: a first color for coloring the colored layer of the optical fiber arranged on one end side in an arrangement direction; and a second color which is a color different from the first color and which colors the colored layer of other optical fibers not colored with the first color, and
wherein the number of optical fibers colored with the first color is different from the number of optical fibers colored with the second color.

2. The optical fiber ribbon according to claim 1,
wherein a ribbon marking is applied to the optical fiber ribbon.

3. The optical fiber ribbon according to claim 1 or 2,
wherein the color of the colored layer of at least one of the optical fibers colored with the second color is white or black.

4. The optical fiber ribbon according to claim 1,
wherein the second color is a transparent color, and
wherein a ribbon marking is applied to the optical fiber ribbon.

5. An optical unit in which the optical fiber ribbons according to any one of claims 1 to 4 are collected.

6. An optical fiber cable that accommodates the optical fiber ribbon according to any one of claims 1 to 4.
